Europäisches Patentamt

European Patent Office

Office européen des brevets

(19)

(11) Numéro de publication : **0 013 215**
**B1**

(12) # FASCICULE DE BREVET EUROPÉEN

(45) Date de publication du fascicule du brevet :
29.02.84

(21) Numéro de dépôt : **79401014.0**

(22) Date de dépôt : **13.12.79**

(51) Int. Cl.³ : **C 25 B  9/00**, C 02 F  1/46

(54) **Dispositif d'électrolyse.**

(30) Priorité : **20.12.78 FR 7835830**

(43) Date de publication de la demande :
**09.07.80 Bulletin 80/14**

(45) Mention de la délivrance du brevet :
**29.02.84 Bulletin 84/09**

(84) Etats contractants désignés :
**BE DE GB IT NL SE**

(56) Documents cités :
**US-A- 2 619 457**
**US-A- 3 092 566**
**US-A- 3 317 350**

(73) Titulaire : **ECOPOL Société Anonyme**
**26, rue du Château des Rentiers**
**F-75013 Paris (FR)**

(72) Inventeur : **Cohen, Samuel**
**35, rue de Saint-Quentin**
**F-75010 Paris (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

Dispositif d'électrolyse

L'invention concerne un dispositif d'électrolyse et en particulier un dispositif d'électrolyse dont au moins certaines des électrodes sont consommables.

La plupart des dispositifs d'électrolyse connus comprennent une cuve remplie d'électrolyte dans laquelle plongent des électrodes constituées par un empilement de plaques planes et parallèles disposées verticalement et à une certaine distance les unes des autres, ces plaques étant généralement reliées à des tiges de connexion électrique situées dans la partie supérieure de la cuve.

On connaît aussi du document US-A-2 619 457 un dispositif d'électrolyse dans lequel les électrodes planes et consommables sont empilées et disposées horizontalement dans une cuve d'électrolyse. Ces électrodes sont séparées par des cales et fixées avec celles-ci sur une tige verticale. Des joints d'étanchéité entourant les cales empêchent la pénétration de l'électrolyte jusqu'aux cales.

Dans tous ces dispositifs, lorsque les électrodes ou seulement certaines d'entre elles sont réalisées en un matériau consommable tel que du graphite ou du cuivre, l'espace interélectrodes tend à augmenter au fur et à mesure de l'utilisation du dispositif d'électrolyse. Lorsque de tels dispositifs d'électrolyse sont destinés à des applications qui nécessitent une puissance consommée et un rendement faradique aussi constants que possible, il est donc nécessaire de remplacer très fréquemment les électrodes.

Afin de remédier à cet inconvénient, il est connu d'utiliser des électrodes en matériaux très peu consommables mais cette solution qui limite fortement le choix des matériaux ne peut pas être adoptée dans tous les cas, notamment lorsqu'elle conduit à réaliser des dispositifs d'électrolyse dont les caractéristiques de fonctionnement sont inférieures aux caractéristiques souhaitées.

L'invention a pour objet la réalisation d'un dispositif d'électrolyse dont au moins certaines des électrodes sont consommables et dans lequel l'espacement entre deux électrodes consécutives reste cependant constant quelle que soit l'usure des électrodes consommables.

Le dispositif d'électrolyse selon l'invention comprend une cuve remplie d'électrolyte, dans laquelle sont empilées des électrodes planes disposées horizontalement et consommables au moins pour certaines d'entre elles, deux électrodes successives étant séparées par des cales de même épaisseur en matériau inerte à l'électrolyse, caractérisé en ce que l'électrolyte est en contact avec les électrodes sur toute la surface de celles-ci qui n'est pas en contact avec les cales, la surface de contact entre les cales et les électrodes étant suffisamment faible pour que l'action de l'électrolyte sur les électrodes soit pratiquement uniforme, de telle sorte que l'usure des électrodes soit régulière sur toute leur surface, et en ce que les électrodes et les cales reposent les unes sur les autres uniquement par gravité, de telle sorte que l'espacement entre deux électrodes successives reste sensiblement constant.

Selon un mode de réalisation particulier de l'invention, les cales sont constituées par des billes de même diamètre, deux électrodes consécutives étant séparées par au moins trois billes non alignées. Dans ce mode de réalisation, les billes peuvent être enfilées sur des fils verticaux, en matériau inerte à l'électrolyse, qui traversent des trous percés dans les électrodes, le diamètre des trous étant sensiblement inférieur à celui des billes. Les fils verticaux sont alors de préférence accrochés à des barres horizontales associées à la partie supérieure de la cuve.

Selon une caractéristique secondaire de l'invention, les électrodes reposent directement sur un élément amovible, en matériau inerte à l'électrolyse, qui peut être muni à ses extrémités de crochets permettant l'extraction de l'ensemble des électrodes hors de la cuve.

On décrira maintenant à titre d'exemple non limitatif un mode de réalisation particulier de l'invention en se référant aux dessins annexés dans lesquels :

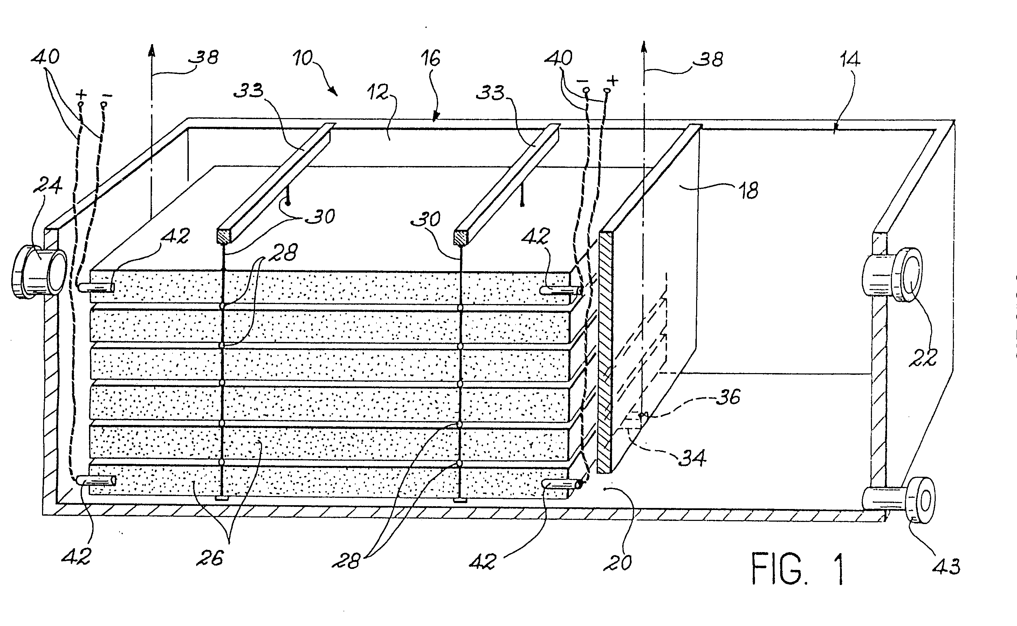

la figure 1 représente une vue en perspective et en coupe longitudinale d'un dispositif d'électrolyse réalisé conformément à l'invention, et particulièrement adapté pour réaliser l'électrolyse d'une solution et notamment d'une solution saline telle que de l'eau de mer, afin de réaliser la stérilisation de celle-ci ;

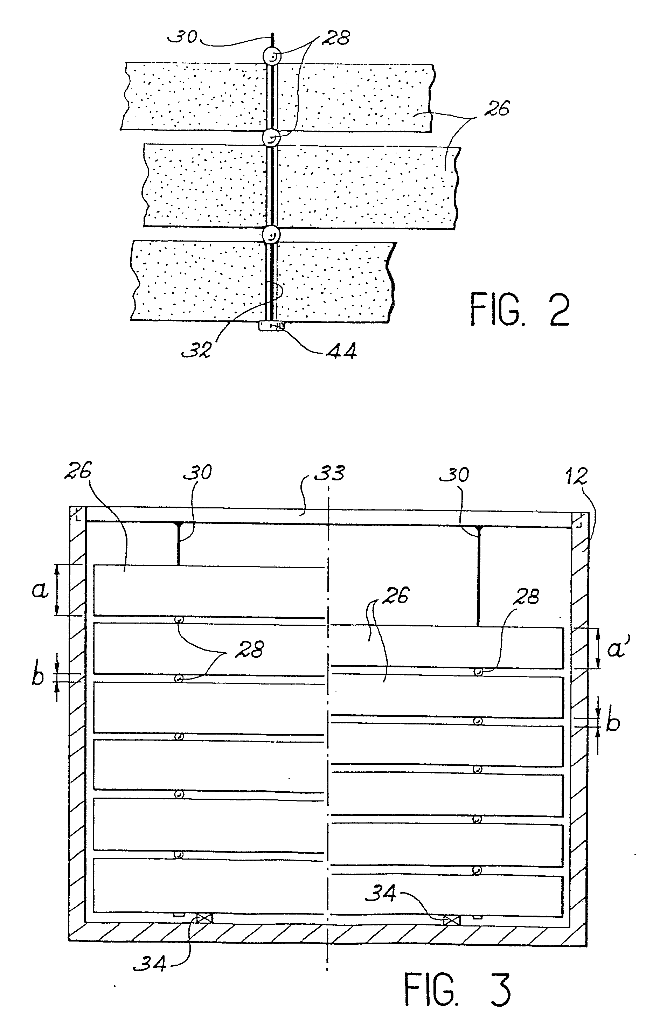

la figure 2 représente, en coupe partielle agrandie, trois des électrodes utilisées dans le dispositif d'électrolyse représenté à la figure 1, ainsi que les billes utilisées pour assurer leur espacement, et le montage de ces billes, et

la figure 3 représente une vue en coupe transversale du dispositif d'électrolyse représenté à la figure 1, la moitié gauche de la figure représentant le dispositif dans l'état qu'il occupe lorsque les électrodes sont neuves et la moitié droite représentant le même dispositif lorsque les électrodes sont usagées.

Le dispositif d'électrolyse représenté à la figure 1, désigné de façon générale par la référence 10, comprend une cuve 12, en matériau inerte à l'électrolyse, par exemple en matière plastique, définissant dans le mode de réalisation représenté deux bacs 14 et 16 séparés par une cloison 18 et communiquant par un passage 20 défini entre le bas de la cloison 18 et le fond de la cuve 12. Le premier bac 14 comprend, près du bord supérieur de la paroi opposée à la cloison 18, un orifice d'entrée 22 et le bac 16 comprend, près du bord supérieur de la paroi opposée à la cloison 18, un orifice de sortie 24. Une telle structure est particulièrement adaptée pour l'électrolyse de solutions liquides telles que, par exemple l'eau de mer. Alors que le premier bac 14, de dimensions réduites, assure la régulation de l'écoulement de la solution à traiter, l'électrolyse en elle-même s'effectue dans le second bac 16, de dimensions sensiblement plus importantes, dans lequel la solution à traiter pénètre par le passage 20 formé en dessous de la cloison 18 entre les bacs 14 et 16. La vidange des bacs s'effectue en fin d'opération, par l'intermédiaire d'un trou de vidange 43.

Le bac d'électrolyse proprement dit 16 comprend un certain nombre d'électrodes planes 26 qui sont empilées les unes sur les autres et disposées horizontalement. Les électrodes 26 sont réalisées, au moins pour certaines d'entre elles, en un matériau consommable tel que le graphite. Comme le montre plus précisément la figure 2, deux électrodes 26 successives sont séparées par des cales de même épaisseur constituées dans le mode de réalisation représenté par des billes 28 de même diamètre. Les billes 28 sont réalisées en matériau inerte à l'électrolyse tel que du verre ou une matière plastique, et elles sont enfilées sur des fils verticaux 30, réalisés également en matériau inerte à l'électrolyse et accrochés par leur extrémité supérieure à deux barres horizontales 33 solidaires des parois de la cuve 12 au niveau de leur bord supérieur comme le montre la figure 1. Les fils 30 traversent des trous cylindriques 32 percés dans les électrodes 26 et dont le diamètre est très sensiblement inférieur à celui des billes 28.

Grâce à cette disposition, les électrodes 26 reposent les unes sur les autres par gravité par l'intermédiaire des billes 28, de sorte que l'espacement entre les électrodes reste constant quelle que soit l'épaisseur de celles-ci.

De préférence, et de façon à permettre le remplacement des électrodes lorsque celles-ci sont usées, un élément amovible (non représenté) se présentant par exemple sous la forme d'une plaque, réalisée en un matériau inerte à l'électrolyse tel que, par exemple du verre ou une matière plastique, est disposé dans le fond du bac 16 de la cuve 12 en dessous de l'empilement d'électrodes 26. Cette plaque amovible comprend des pattes 34 qui font saillie au-delà des extrémités des électrodes vers la cloison 18 et vers la paroi opposée de la cuve 16. Les pattes 34 portent des crochets ou tout autre dispositif analogue représenté schématiquement en 36 à l'aide desquels l'empilement d'électrodes 26 et la plaque amovible peuvent être soulevés dans le sens des flèches sur la figure 1 par tout moyen approprié tel que des chaînes ou des câbles en matériau inerte à l'électrolyse, représentés schématiquement en traits mixtes et désignés par la référence 38.

Comme le montre notamment la figure 1, les électrodes 26 sont de forme parallélépipédique et leur section horizontale est inférieure à celle du bac 16 de la cuve 12 de façon à définir avec la cloison 18 et avec la paroi opposée du bac 16 deux espaces permettant le passage des câbles ou chaînes 38 ainsi que le passage de fils d'alimentation électriques 40 connectés au moyen d'inserts 42 aux électrodes 26 inférieure et supérieure, les fils d'alimentation 40 étant prévus pour être connectés par leur autre extrémité à une source de tension continue (non représentée). En effet, dans le mode de réalisation représenté, l'alimentation électrique des électrodes est effectuée en série, seules les électrodes d'extrémité étant alimentées en courant électrique.

Dans le mode de réalisation représenté, et comme le montre en particulier la figure 1, les barres horizontales 33 sont au nombre de deux et s'étendent transversalement par rapport aux électrodes, chacune de ces barres supportant quatre fils 30 le long desquels sont enfilées alternativement les électrodes 26 et les billes 28, les fils 30 se terminant en dessous de l'électrode inférieure par des parties de butée évasées 44 qui permettent de maintenir la tension des fils.

Le fonctionnement du dispositif d'électrolyse décrit en se référant aux figures 1 et 2 est le suivant :

Comme le montre la partie gauche de la figure 3, lorsque les électrodes 26 sont neuves, elles présentent chacune une épaisseur $a$ et sont espacées les unes des autres au moyen des billes 28 d'une distance $b$. Lorsque les électrodes sont connectées électriquement au moyen des fils d'alimentation électriques 40 à une source de tension continue, et lorsque la solution à traiter circule à l'intérieur de la cuve 14 entre l'orifice d'entrée 22 et l'orifice de sortie 24 en traversant successivement la cuve 14, le passage 20 et la cuve 16, l'électrolyse de la solution s'effectue de façon connue et provoque l'usure des électrodes consommables qui constituent au moins une partie des électrodes 26. Par suite de l'existence de la première cuve 14 et du passage 20 ménagé en dessous de la cloison 18, l'alimentation en électrolyte que constitue la solution à traiter se fait parallèlement aux surfaces en vis-à-vis des différentes électrodes, de telle sorte que l'usure de celles-ci est uniforme. Les électrodes 26 reposant par gravité les unes sur les autres par l'intermédiaire de billes de même diamètre 28 en matériau inerte à l'électrolyse, il en résulte comme l'illustre la partie droite de la figure 3 que la hauteur de l'ensemble diminue graduellement en raison de la nouvelle épaisseur $a'$ de chacune des électrodes, mais que la distance interélectrodes $b$ reste la même. La puissance consommée et le rendement faradique du dispositif d'électrolyse selon l'invention peuvent ainsi être maintenus constants quel que soit l'état d'usure des électrodes 26.

Lorsque l'usure des électrodes 26 est considérée comme trop importante, leur remplacement peut être effectué aisément par extraction de l'ensemble des électrodes au moyen des câbles ou chaînes 38, les barres horizontales 33 étant reçues simplement dans des encoches ménagées dans des parois de la cuve 16 de telle sorte qu'elles peuvent être démontées simultanément et qu'un nouveau jeu d'électrodes peut être mis en place après assemblage préalable de ces électrodes avec des billes 28 intercalées et enfilées sur les fils 30.

Bien que le dispositif d'électrolyse qui vient d'être décrit soit particulièrement adapté pour l'électrolyse de l'eau de mer, on comprendra que l'invention n'est pas limitée à cette application particulière et peut être utilisée dans tout autre type d'électrolyse faisant appel au moins partiellement à des électrodes consommables.

D'autre part, l'invention n'est pas limitée au mode de réalisation qui vient d'être décrit à titre d'exemple, mais en couvre toutes les variantes. Ainsi, les cales de forme de bille 28 peuvent être remplacées par des cales de toute autre forme dont la surface de contact avec les électrodes est pratiquement ponctuelle ou linéaire, dont la résistance mécanique est suffisante pour supporter l'empilement d'électrodes reposant sur elles par gravité, et dont la forme perturbe aussi peu que possible la propagation du courant électrique dans l'électrolyte. A titre d'exemple, des cales se présentant sous la forme de barres cylindriques ou de tiges de section elliptique en contact avec les électrodes par les extrémités de l'ellipse de plus petit rayon peuvent être utilisées à la place des cales sphériques décrites.

**Revendications**

1. Dispositif d'électrolyse, comprenant une cuve (12) remplie d'électrolyte, dans laquelle sont empilées des électrodes planes (26) disposées horizontalement et consommables au moins pour certaines d'entre elles, deux électrodes successives étant séparées par des cales (28) de même épaisseur en matériau inerte à l'électrolyse, caractérisé en ce que l'électrolyte est en contact avec les électrodes (26) sur toute la surface de celles-ci qui n'est pas en contact avec les cales (28), la surface de contact entre les cales et les électrodes étant suffisamment faible pour que l'action de l'électrolyte sur les électrodes soit pratiquement uniforme, de telle sorte que l'usure des électrodes soit régulière sur toute leur surface, et en ce que les électrodes (26) et les cales (28) reposent les unes sur les autres uniquement par gravité, de telle sorte que l'espacement entre deux électrodes successives reste sensiblement constant.

2. Dispositif selon la revendication 1, caractérisé en ce que les cales sont constituées par des billes (28) de même diamètre, deux électrodes (26) successives étant séparées par au moins trois billes non alignées.

3. Dispositif selon la revendication 2, caractérisé en ce que les billes (28) sont enfilées sur des fils verticaux (30) en matériau inerte à l'électrolyse, qui traversent des trous (32) percés dans les électrodes, le diamètre des trous étant sensiblement inférieur à celui des billes.

4. Dispositif selon la revendication 3, caractérisé en ce que les fils verticaux (30) sont accrochés à des barres horizontales (33) associées à la partie supérieure de la cuve (12).

5. Dispositif selon l'une quelconque des revendications précédentes, caractérisé en ce que les électrodes (26) reposent directement sur un élément amovible (34), en matériau inerte à l'électrolyse.

6. Dispositif selon la revendication 5, caractérisé en ce que l'élément amovible (34) est muni à ses extrémités de crochets (36) permettant l'extraction de l'ensemble des électrodes (26) hors de la cuve (12).

7. Dispositif selon l'une quelconque des revendications précédentes, caractérisé en ce que les électrodes (26) sont de forme parallélépipédique.

8. Dispositif selon la revendication 7, prise en combinaison avec la revendication 4, caractérisé en ce que les barres horizontales (33) s'étendent transversalement par rapport aux électrodes (26).

9. Dispositif selon l'une quelconque des revendications précédentes, caractérisé en ce que la cuve (12) a une section horizontale supérieure à celle des électrodes (26), de façon à permettre le passage de fils d'alimentation électriques (40) et l'extraction des électrodes usées et à obtenir un écoulement homogène de l'électrolyte.

10. Dispositif selon l'une quelconque des revendications précédentes, caractérisé en ce que la cuve (12) comprend deux bacs (14, 16) séparés par une cloison (18) et communiquant par au moins un passage (20) disposé au bas de la cloison, un orifice d'entrée (22) débouchant dans le premier bac (14), et un orifice de sortie (24) débouchant dans le second bac (16), les orifices d'entrée et de sortie étant formés au-dessus des électrodes (26), celles-ci étant disposées dans le second bac (16).

**Claims**

1. Electrolysis apparatus comprising a tank (12) supplied with electrolyte, in which are stacked horizontally-disposed planar electrodes (26), at least some of which are consumable, two adjacent electrodes being separated by spacers (28) having the same thickness and formed from electrolytically-inert material, characterized in that the electrolyte is in contact with the entire surface of the electrodes (26) that is not in contact with the spacers (28), the contact surface between the spacers and the electrodes being sufficiently small for the action of the electrolyte on the electrodes to be substantially uniform, whereby erosion of the electrodes in uniform over their entire surface, and in that the electrodes (26) and spacers (28) rest on one another only through gravity whereby the distance between two adjacent electrodes remains substantially constant.

2. Apparatus according to claim 1, characterized in that the spacers comprise beads (28) having the same diameter, two adjacent electrodes (26) being separated by at least three non-aligned beads.

3. Apparatus according to claim 2, characterized in that the beads (28) are threaded on vertical wires (30) of electrolytically-inert material passing through holes (32) pierced in the electrodes, the diameter of the holes being substantially less than that of the beads.

4. Apparatus according to claim 3, characterized in that the vertical wires (30) are suspended from horizontal beams (33) associated with the upper part of the tank (12).

5. Apparatus according to any one of the preceding claims, characterized in that the electrodes (26) rest directly upon a movable element (34) formed from electrolytically-inert material.

6. Apparatus according to claim 5, characterized in that the ends of the movable element (34) are provided with hooks (36) whereby to enable removal of the assembly of electrodes (26) from the tank (12).

7. Apparatus according to any one of the preceding claims, characterized in that the electrodes (26) are of parallelipipedal form.

8. Apparatus according to claim 7, taken in combination with claim 4, characterized in that the horizontal beams (33) extend transversely with respect to the electrodes (26).

9. Apparatus according to any one of the preceding claims, characterized in that the tank (12) has a horizontal section greater than that of the electrodes (26), whereby to permit the passage of electrical leads (40) and removal of used electrodes, and to obtain a homogeneous flow of electrolyte.

10. Apparatus according to any one of the preceding claims, characterized in that the tank (12) comprises two sub-tanks (14, 16) separated by a bulkhead (18) and communicating by at least one passage (20) located at the base of the bulkhead, an inlet (22) opening into the first sub-tank (14), and an outlet (24) opening into the second sub-tank (16), the inlet and outlet being located above the electrodes (26) which are themselves located in the second sub-tank (16).

**Ansprüche**

1. Elektrolysevorrichtung mit einem mit Elektrolyt gefüllten Behälter (12) und in diesem gestapelten, waagerecht angeordneten, ebenen Elektroden (26), von denen wenigstens einige konsumierbar sind, und von denen jeweils zwei aufeinander folgende Elektroden durch gleiche Dicke aufweisende Beilagen (28) aus einem gegenüber der Elektrolyse inerten Werkstoff voneinander getrennt sind, dadurch gekennzeichnet, daß der Elektrolyt mit der gesamten nicht in Kontakt mit den Beilagen (28) stehenden Oberfläche der Elektroden (26) in Berührung ist, daß die Berührungsfläche zwischen den Beilagen und den Elektroden ausreichend klein ist, daß die Einwirkung des Elektrolyts auf die Elektroden praktisch gleichförmig ist, so daß der Verbrauch der Elektroden über die gesamte Oberfläche derselben gleichmäßig verläuft, und daß die Elektroden (26) und die Beilagen (28) allein unter Schwerkrafteinfluß aufeinander ruhen, so daß der Abstand zwischen zwei aufeinander folgenden Elektroden im wesentlichen konstant bleibt.

2. Vorrichtung nach Anspruch 1, dadurch gekennzeichnet, daß die Beilagen als Kugeln (28) gleichen Durchmessers ausgebildet sind und daß zwei aufeinander folgende Elektroden (26) durch wenigstens drei nicht in einer geraden Reihe angeordnete Kugeln voneinander getrennt sind.

3. Vorrichtung nach Anspruch 2, dadurch gekennzeichnet, daß die Kugeln (28) auf senkrechte Fäden (30) aus einem gegenüber der Elektrolyse inerten Material aufgefädelt sind, welche in den Elektroden geformte Bohrungen (32) durchsetzen, wobei der Durchmesser der Bohrungen wesentlich kleiner ist als der der Kugeln.

4. Vorrichtung nach Anspruch 3, dadurch gekennzeichnet, daß die senkrechten Fäden (30) an waagerechten Stangen (33) verankert sind, welche am oberen Teil des Behälters (12) angeordnet sind.

5. Vorrichtung nach einem der vorstehenden Ansprüche, dadurch gekennzeichnet, daß die Elektroden (26) direkt auf einem aushebbaren Element (34) aus einem gegenüber der Elektrolyse inerten Werkstoff ruhen.

6. Vorrichtung nach Anspruch 5, dadurch gekennzeichnet, daß das aushebbare Element (34) an seinen Enden mit Haken (36) versehen ist, welche das Herausheben der gesamten Anordnung von Elektroden (26) aus dem Behälter (12) gestatten.

7. Vorrichtung nach einem der vorstehenden Ansprüche, dadurch gekennzeichnet, daß die Elektroden (26) jeweils die Form eines Parallelepipeds haben.

8. Vorrichtung nach Anspruch 7, in Verbindung mit Anspruch 4, dadurch gekennzeichnet, daß sich die waagerechten Stangen (33) in bezug auf die Elektroden (26) in Querrichtung erstrecken.

9. Vorrichtung nach einem der vorstehenden Ansprüche, dadurch gekennzeichnet, daß der Behälter (12) in der Waagerechten einen größeren Querschnitt hat als die Elektroden (26), welcher die Einführung von elektrischen Speiseleitungen (40) sowie das Herausheben von verbrauchten Elektroden und die Erzielung einer gleichmäßigen Umwälzung des Elektrolyts ermöglicht.

10. Vorrichtung nach einem der vorstehenden Ansprüche, dadurch gekennzeichnet, daß der Behälter (12) zwei durch eine Trennwand (18) voneinander getrennte und über wenigstens einen Durchlaß (20) am unteren Teil der Trennwand miteinander strömungsverbundene Abteilungen (14, 16) aufweist, daß in der ersten Abteilung (14) eine Einlaßöffnung (22) und in der zweiten Abteilung (16) eine Auslaßöffnung (24) ausmündet und daß die Einlaß- und Auslaßöffnungen oberhalb der in der zweiten Abteilung (16) angeordneten (26) geformt sind.

FIG. 1

FIG. 2

FIG. 3